# EUROPÄISCHE PATENTSCHRIFT

(11) **EP 4 427 913 B1**
(45) Veröffentlichungstag und Bekanntmachung des Hinweises auf die Patenterteilung: **22.07.2026**
(21) Anmeldenummer: 23160344.0
(22) Anmeldetag: 07.03.2023
(51) Int. Cl.: B29C 65/20, B29C 65/78, F16L 47/28, F16L 47/02

(54) **FITTINGHALTER**
FITTING HOLDER
SUPPORT DE RACCORD

(43) Veröffentlichungstag der Anmeldung: 11.09.2024
(73) Patentinhaber: Georg Fischer Rohrleitungssysteme AG, 8201 Schaffhausen (CH)
(72) Erfinder: Roesch, Juergen, 79853 Lenzkirch (DE); Graf, Marcel, 8212 Neuhausen am Rheinfall (CH)
(74) Vertreter: Fenner, Seraina

(56) Entgegenhaltungen:
- JP-A- S5 746 859
- JP-A- S6 110 438

## Beschreibung

Die Erfindung betrifft einen Fittinghalter ausgebildet zur Aufnahme eines Abzweigrohres während eines Schweissvorgangs zum Anbringen des Abzweigrohres an eine Rohrleitung oder ein Rohr, wobei unterschiedlich dimensionierte Abzweigrohre vom Fittinghalter aufnehmbar sind, beinhaltend, ein hohlzylinderförmiges Gehäuse mit einem oberen Bereich, der während der Schweissung von der daran anzuschweissenden Rohrleitung abgewandt ist und einen unteren Bereich, der während der Schweissung der daran anzuschweissenden Rohrleitung zugewandt ist, wobei im unteren Bereich Halterungen zur axialen Fixierung des vom Fittinghalter aufnehmbaren Abzweigrohres angeordnet sind, einen verschiebbar im Gehäuse angeordneten Ring und den Ring nach unten drückende Spannelemente.

Zum Anbringen von Abzweigrohren an Rohrleitungen oder Rohren wird eine Bohrung in die bestehende Leitung aus Kunststoff eingebracht und diese sowie das an der Rohrleitung anbringbare Abzweigrohr mit einem Heizspiegel erwärmt. Bei erreichter Temperatur wird der Heizspiegel entfernt und das Abzweigrohr in die ebenfalls erwärmte Bohrung eingepresst. Nachteilig daran ist, dass das Abzweigrohr ausschliesslich von der Bohrung geführt ist und durch den erwärmten weichen Kunststoff und die sehr kurze Führungsfläche der Bohrung das Abzweigrohr schräg bzw. nicht senkrecht auf die Rohrleitungsachse angeschweisst werden kann, wodurch auch die Schweissnaht nicht rundherum gleichmässig ausfällt.

Die DE 2119251 sieht hierzu eine Einrichtung zum Verbinden eines Abgangsstutzens mit einer Hauptleitung vor, bei der der anzuschweissende Abgangsstutzen durch die Einrichtung geführt ist, so dass das Abgangsrohr senkrecht zur Hauptleitung angeschweisst wird.

Nachteilig hierbei ist die sperrige Einrichtung sowie, dass für jeden Durchmesser des anzuschweissenden Abgangsstutzens eine individuelle Halterung vorhanden sein muss.

Die JPS 61 10438A offenbart ein Gerät das das Verbinden und Reparieren von unterirdischen Rohren durch einen speziellen Klemmmechanismus vereinfacht, und hält die Rohre während des Vorgangs sicher in Position hält.

Die JPS57 46859A offenbart einen automatisierten Prozess, der einen gleichmässigen Druck auf einen Sattelhalter ausübt, wodurch die Notwendigkeit manueller Arbeit entfällt.

Es ist Aufgabe der Erfindung eine Vorrichtung vorzuschlagen, die ein senkrechtes Anschweissen eines Abzweigrohrs an eine Rohrleitung oder ein Rohr gewährleistet sowie dass dieselbe Vorrichtung für unterschiedlich dimensionierte Abzweigrohre einsetzbar ist.

Diese Aufgabe wird erfindungsgemäss dadurch gelöst, dass der Fittinghalter unterschiedliche Führungsinnendurchmesser aufweist, die die unterschiedlich dimensionierten Abzweigrohre an ihren unterschiedlich dimensionierten Aussendurchmesser im Fittinghalter führt.

Der erfindungsgemässe Fittinghalter ist zur Aufnahme eines Abzweigrohres während eines Schweissvorgangs ausgebildet. Das Abzweigrohr ist zum Anbringen bzw. Anschweissen an eine Rohrleitung oder ein Rohr im Fittinghalter angeordnet, wobei unterschiedlich dimensionierte Abzweigrohre vom Fittinghalter aufnehmbar sind. Der Fittinghalter dient als Installationshilfe und wird nach dem Schweissvorgang vom angeschweissten Abzweigrohr entfernt. Der Fittinghalter beinhaltet ein hohlzylinderförmiges Gehäuse mit einem oberen Bereich, der während des Installations- bzw. Schweissvorgangs von der daran anzuschweissenden Rohrleitung abgewandt ist. Der Fittinghalter beinhaltet einen unteren Bereich, der der daran anzuschweissenden Rohrleitung zugewandt ist, wobei im unteren Bereich Halterungen zur axialen Fixierung des vom Fittinghalter aufnehmbaren Abzweigrohres angeordnet sind. Die Halterungen sind am unteren Ende des Gehäuses angeordnet. Das Abzweigrohr ist für die Installation konzentrisch im Fittinghalter fixiert, wobei der Fittinghalter nach der abgeschlossenen Installation bzw. Schweissung vom Abzweigrohr abgezogen wird. Das Abzweigrohr ist nicht Teil der erfindungsgemässen Vorrichtung, sondern dient nur dem besseren Verständnis der Funktion des Fittinghalters. Der Fittinghalter beinhaltet einen verschiebbar im Gehäuse angeordneten Ring und den Ring nach unten drückende Spannelemente. Der Ring ist im Gehäuse axial verschiebbar angeordnet. Zudem ist der Ring vorzugsweise nicht drehbar im Gehäuse angeordnet.

Der Fittinghalter weist unterschiedliche Führungsinnendurchmesser auf, die die unterschiedlich dimensionierten Abzweigrohre an ihren unterschiedlich dimensionierten Aussendurchmesser im Fittinghalter führt.

Eine vorteilhafte Ausführungsform besteht darin, dass ein Führungsinnendurchmesser im Gehäuseinneren und ein Führungsinnendurchmesser am verschiebbaren Ring angeordnet sind. Beispielsweise befindet sich der verschiebbare Ring in einer unteren Position im Gehäuse, in der der Ring auf einer Auflagefläche aufliegt und mittels den Spannelementen nach unten gedrückt ist. Durch den Führungsinnendurchmesser am Ring, der sich in der unteren Position befindet, wird das eingeführte Abzweigrohr bzw. dessen Aussendurchmesser konzentrisch geführt. Als vorteilhaft hat sich gezeigt, dass wenn ein grösser dimensioniertes Abzweigrohr mit einem grösseren Aussendurchmesser in den Fittinghalter eingeführt wird, der Ring gegen die Spannelemente nach oben gedrückt wird, da das Abzweigrohr einen grösseren Aussendurchmesser aufweist als der Führungsinnendurchmesser des Rings ist und somit weggeschoben werden muss, damit das grössere Abzweigrohr überhaupt vom Fittinghalter aufgenommen werden kann. Das grössere Abzweigrohr ist dann vorzugsweise vom Führungsinnendurchmesser im Gehäuse geführt und liegt an diesem konzentrisch an. Vorzugsweise ist der Führungsinnendurchmesser am Gehäuse im unteren Bereich angeordnet und befindet sich unterhalb des verschiebbaren Rings.

Vorzugsweise sind die Halterungen zur axialen Fixierung des Abzweigrohres als federnde Laschen entlang des Umfangs ausgebildet sind. Es hat sich als vorteilhaft gezeigt, wenn zwischen zwei und sechs Laschen, speziell bevorzugt drei oder vier Laschen regelmässig entlang des Umfangs des Gehäuses angeordnet sind. Ebenso vorteilhaft ist es, wenn am Innendurchmesser der Laschen Nuten zur Aufnahme des Abzweigrohres angeordnet sind. Als weitere vorteilhafte Ausführungsform hat sich gezeigt, wenn die Laschen durch eine Schutzhülse umgeben sind.

Als bevorzugte Ausführungsform hat sich gezeigt, wenn die Spannelemente als Druckfederelemente ausgebildet sind. Es ist vorteilhaft, wenn zwischen drei bis sechs Druckfedern geführt im Gehäuse, regelmässig entlang des Durchmessers angeordnet sind. Als Führung kann beispielsweise ein zylindrischer Stift, eine Schraube oder ein sonstiges zylindrisches Element dienen das vorzugsweise im Innern der Druckfeder verläuft.

Als weitere vorteilhafte Ausführungsform weist der Fittinghalter einen Deckel auf, der das Herausfallen des Ringes aus dem Gehäuse verunmöglicht. Zudem ist es vorteilhaft, wenn im Deckel ein weiterer Führungsinnendurchmesser angeordnet ist, der das Abzweigrohr konzentrisch führt. Eine solche Ausführungsform ist speziell dann vorteilhaft, wenn das Abzweigrohr als langes Kunststoffrohr ausgebildet ist welches den Fittinghalter durchragt.

Als vorteilhaft hat sich gezeigt, wenn das Gehäuse eine Auflagefläche am Innendurchmesser aufweist, auf die der Ring mittels Spannelement gedrückt wird. Wie bereits erwähnt bildet der Führungsinnendurchmesser des Rings, wenn er an der Auflagefläche anliegt, eine Führung für das entsprechende Abzweigrohr und lässt sich für andere Dimensionen des Abzweigrohres nach oben verschieben.

Als vorteilhaft hat sich gezeigt, wenn das Gehäuse des Fittinghalters aus Kunststoff ist. Vorzugsweise ist auch der Ring aus Kunststoff.

Vorzugsweise ist das Gehäuse als 3D-Druck- oder Spritzgussteil ausgebildet. Dies gewährleistet ein geringes Gewicht sowie eine optimierte Formgestaltung.

Als vorteilhaft hat sich auch gezeigt, wenn im oberen Bereich des Gehäuses die äussere Formgebung als ergonomische Form ausgebildet und gut handhabbar ist.

Vorzugsweise ist das Gehäuse einteilig bzw. einstückig ausgebildet, das heisst, dass das Gehäuse keinen Zusammenbau bedarf.

Es ist vorteilhaft, wenn im Gehäuse Längsführungen angeordnet sind. Diese können auch dem Befestigen des Deckels dienen.

Als vorteilhaft hat sich gezeigt, wenn der Ring mit den im Gehäuse angeordneten Längsführungen zusammenwirkende Führungselemente aufweist. Dadurch lässt sich der Ring im Gehäuse nicht drehen, sondern ist nur axial verschiebbar.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: einen Längsschnitt durch einen erfindungsgemässen Fittinghalter,
- Fig. 2: eine dreidimensionale Schnittansicht des erfindungsgemässen Fittinghalter,
- Fig. 3: einen Längsschnitt durch einen erfindungsgemässen Fittinghalter mit eingeführtem Abzweigrohr mit kleinem Aussendurchmesser,
- Fig. 4: einen Längsschnitt durch einen erfindungsgemässen Fittinghalter mit eingeführtem Abzweigrohr mit grossem Aussendurchmesser,
- Fig. 5: einen Längsschnitt durch einen erfindungsgemässen Fittinghalter mit eingeführtem Abzweigrohr in Schweissposition in der Rohrleitung und
- Fig. 6: einen Längsschnitt durch einen erfindungsgemässen Fittinghalter mit eingeführtem Abzweigrohr in Schweissposition in einer vorisolierten Rohrleitung.

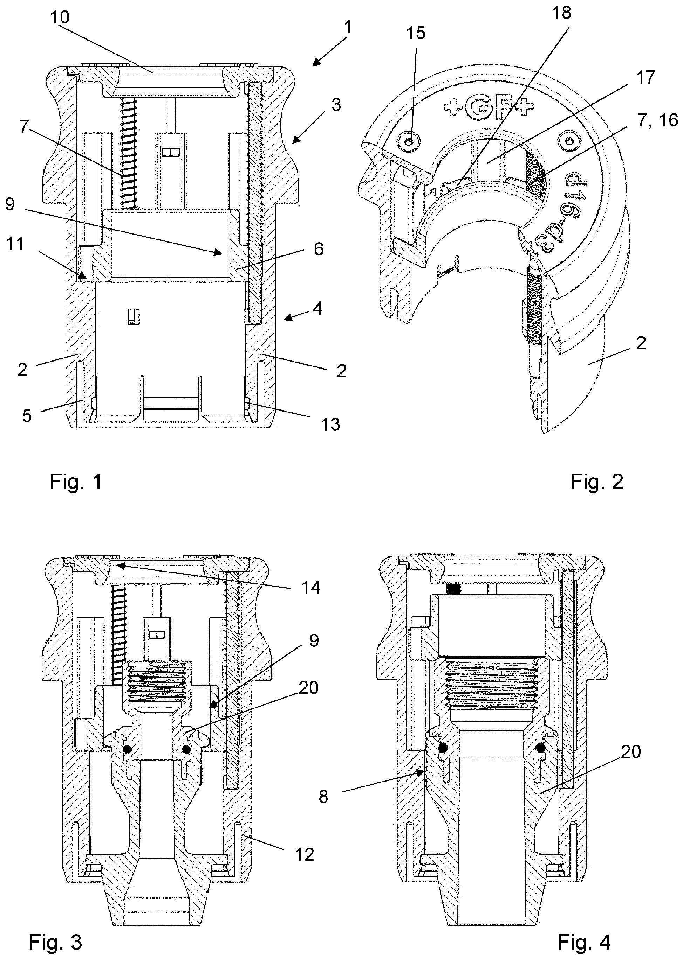

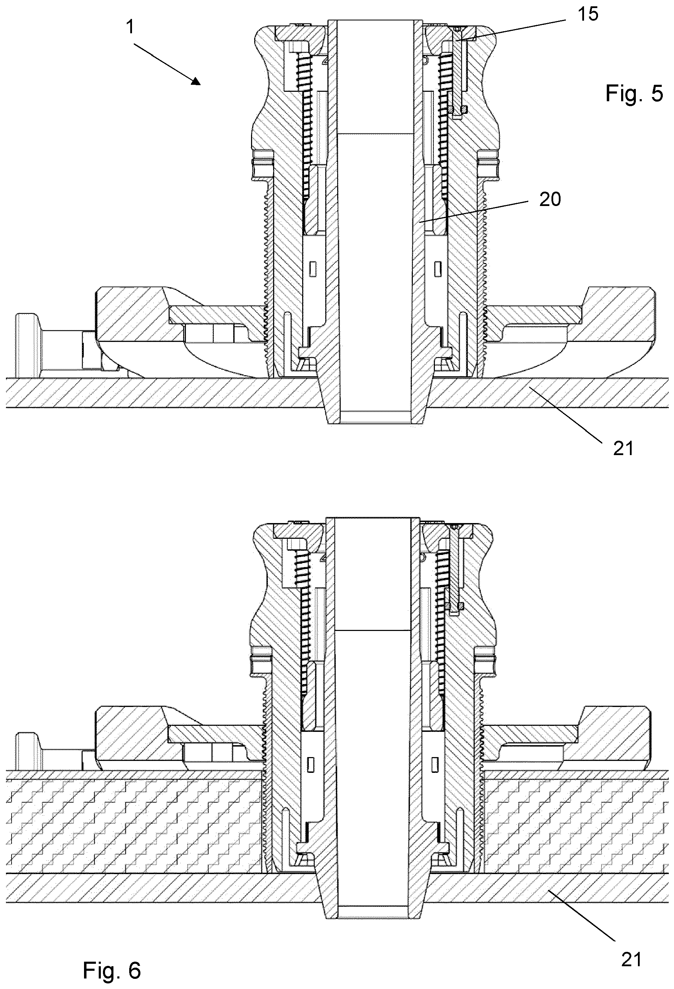

Die in Fig. 1 dargestellte Zeichnung zeigt einen Längsschnitt durch einen erfindungsgemässen Fittinghalter 1. Der Fittinghalter 1 ist ausgebildet zur Aufnahme eines Abzweigrohres 20 das an eine Rohrleitung 21 oder ein Rohr 21 angeschweisst wird. In den Figuren 3 bis 6 ist das vom Fittinghalter 1 aufgenommene Abzweigrohr 20 ersichtlich, wobei in den Figuren 5 und 6 gezeigt ist, wie das Abzweigrohr 20 mit Hilfe des Fittinghalters 1 an einem Rohr 21 oder einer Rohrleitung 21 angeschweisst wird. Der Fittinghalter 1 ist geeignet um unterschiedlich dimensionierte Abzweigrohre 20 aufzunehmen sowie auch unterschiedliche Ausführungsformen von Abzweigrohren 20. Der Fittinghalter 1 weist ein Gehäuse 2 auf, das vorzugsweise aus Kunststoff ist. Das Gehäuse 2 weist eine holzylindrische Form auf und ist vorzugsweise einteilig ausgebildet, wie das in den Figuren 1 bis 6 gut erkennbar ist.

Das Gehäuse 2 weist einen oberen und einen unteren Bereich 3, 4 auf. Der obere Bereich ist während der Installation bzw. der Verschweissung von der Rohrleitung 21 abgewandt und der untere Bereich ist der Rohrleitung 21 zugewandt. Im unteren Bereich bzw. am unteren Ende des Gehäuses 2 sind Halterungen 5 angeordnet, wobei die Halterungen 5 vorzugsweise als federnde Laschen 5 ausgebildet sind. Am Innenumfang der Laschen 5 sind Nuten 13 angeordnet um das Abzweigrohr 20 axial im Fittinghalter 1 zu fixieren. Die Nuten 13 sind aus den Figuren 1 und 2 gut ersichtlich. Die Halterungen 5, welche vorzugsweise als federnde Laschen 5 ausgebildet sind, sind vorzugsweise von einer Schutzhülse 12 umgeben, wobei diese Schutzhülse 12 ebenfalls integraler Bestandteil des Gehäuses 2 ist und zum einteiligen Gehäuse wie auch die Halterungen 5 bzw. Laschen 5 dazugehören. Der Fittinghalter 1 beinhaltet einen Ring 6, wobei der Ring 6 axial verschiebbar im Gehäuse 2 angeordnet ist. In Figur 1 ist gut erkennbar, dass der Ring 6 mit Spannelementen 7 bis an die Auflagefläche 11 im Gehäuseinneren gedrückt wird. Die Spannelemente 7 sind vorzugsweise als Druckfedern 7 ausgebildet und weisen in ihrem Innern vorzugsweise eine Führung 16 auf, wie z.B. einen zylindrischen Stift oder ein zylindrisches Befestigungselement. Der Fittinghalter 1 weist zur Aufnahme der unterschiedlichen Abzweigrohrdimensionen unterschiedliche Führungsinnendurchmesser 8, 9, 14 auf, die die Abzweigrohre 20 an ihren Aussendurchmessern führen. Vorteilhaft ist es, wenn einer der Führungsinnendurchmesser 8 im Gehäuse 2 angeordnet ist und der andere am Ring 6. Fig. 3 zeigt den erfindungsgemässen Fittinghalter 1 mit einem kleineren Abzweigrohr 20. Gut ersichtlich ist, dass dieses Abzweigrohr 20 durch den Führungsinnendurchmesser 9 am Ring 6 geführt wird und der Ring 6 im Gehäuse 2 an der Auflagefläche 11 anliegt. Fig. 4 zeigt eine grössere Ausführungsform des Abzweigrohres 20, welches vom Fittinghalter 1 aufgenommen ist. Gut ersichtlich ist, dass der Ring 6 mit dem Abzweigrohr 20 nach oben gegen die Spannelemente 7 gedrückt ist, damit der kleinere Führungsinnendurchmesser 9 im Ring 6 die Aufnahme des Abzweigrohres 20 nicht behindert und so das Abzweigrohr 20 vom Führungsinnendurchmesser 8 im Gehäuse 2 geführt wird. Vorzugsweise dient der Führungsinnendurchmesser 14 im Deckel 10 als weitere Möglichkeit ein Abzweigrohr 20 zu führen, wie in den Fig. 5 und 6 ersichtlich. Zudem verhindert der Deckel 10, dass der Ring 6 aus dem Gehäuse 2 herausfallen kann z. B. bei einer über Kopf Installation. Der Deckel 10 ist mit Befestigungsmitteln 15 am Gehäuse befestigt. Aus den Figuren 5 und 6 ist zudem ersichtlich, dass der Fittinghalter 1 bei Schweissungen an normalen Rohren wie auch vorisolierten Rohren eingesetzt werden kann. Fig. 2 zeigt die im Gehäuseinneren angeordneten Längsführungen 17 mit denen die Führungselemente 18 am Ring 6 korrespondieren und der Ring 6 dadurch ausschliesslich axial verschiebbar ist. Der Fittinghalter 1 weist zudem im oberen Bereich 3 am Aussendurchmesser zur besseren Handhabung vorzugsweise eine ergonomische Formgestaltung auf.

### Bezugszeichenliste

- 1: Fittinghalter
- 2: Gehäuse
- 3: Oberer Bereich
- 4: Unterer Bereich
- 5: Halterung / federnde Laschen
- 6: Ring
- 7: Spannelement / Druckfederelement
- 8: Führungsinnendurchmesser im Gehäuse
- 9: Führungsinnendurchmesser am Ring
- 10: Deckel
- 11: Auflagefläche
- 12: Schutzhülse
- 13: Nut
- 14: Führungsinnendurchmesser Deckel
- 15: Befestigungsmittel
- 16: Führung Druckfeder
- 17: Längsführung
- 18: Führungselement

- 20: Abzweigrohr
- 21: Rohrleitung /Rohr

## Patentansprüche

1. Fittinghalter (1) ausgebildet zur Aufnahme eines Abzweigrohres (20) während eines Schweissvorgangs zum Anbringen des Abzweigrohres (20) an eine Rohrleitung (21) oder ein Rohr (21), wobei unterschiedlich dimensionierte Abzweigrohre (20) vom Fittinghalter (1) aufnehmbar sind, beinhaltend, ein hohlzylinderförmiges Gehäuse (2) mit einem oberen Bereich (3), der während der Schweissung von der daran anzuschweissenden Rohrleitung (21) abgewandt ist und einen unteren Bereich (4), der währen der Schweissung der daran anzuschweissenden Rohrleitung (21) zugewandt ist, wobei im unteren Bereich (4) Halterungen (5) zur axialen Fixierung des vom Fittinghalter (1) aufnehmbaren Abzweigrohres (20) angeordnet sind, einen verschiebbar im Gehäuse (2) angeordneten Ring (6) und den Ring (6) nach unten drückende Spannelemente (7) **dadurch gekennzeichnet, dass** der Fittinghalter (1) unterschiedliche Führungsinnendurchmesser (8, 9, 14) aufweist, die die unterschiedlich dimensionierten Abzweigrohre (20) an ihren unterschiedlich dimensionierten Aussendurchmesser im Fittinghalter (1) führt.

2. Fittinghalter (1) nach Anspruch 1, **dadurch gekennzeichnet, dass** ein Führungsinnendurchmesser (8) im Gehäuse (2) und ein Führungsinnendurchmesser (9) im verschiebbaren Ring (6) angeordnet sind.

3. Fittinghalter (1) nach Anspruch 1 oder 2, **dadurch gekennzeichnet, dass** die Halterungen (5) zur axialen Fixierung des Abzweigrohres (20) als federnde Laschen (5) ausgebildet sind.

4. Fittinghalter (1) nach Anspruch 1 bis 3, **dadurch gekennzeichnet, dass** die Spannelemente (7) als Druckfederelemente (7) ausgebildet sind.

5. Fittinghalter (1) nach Anspruch 1 bis 4, **dadurch gekennzeichnet, dass** der Fittingshalter (1) einen Deckel (10) aufweist, der das herausfallen des Ringes (6) aus dem Gehäuse (2) verunmöglicht.

6. Fittinghalter (1) nach Anspruch 5 **dadurch gekennzeichnet, dass** der Deckel einen Führungsinnendurchmesser (14) zur Führung eines Abzweigrohres (20) aufweist.

7. Fittinghalter (1) nach Anspruch 1 bis 6, **dadurch gekennzeichnet, dass** das Gehäuse (2) eine Auflagefläche (11) aufweist, auf die der Ring (6) mittels Spannelement (7) gedrückt wird.

8. Fittinghalter (1) nach Anspruch 1 bis 7, **dadurch gekennzeichnet, dass** das Gehäuse (2) des Fittinghalter (1) aus Kunststoff ist.

9. Fittinghalter (1) nach Anspruch 1 bis 8, **dadurch gekennzeichnet, dass** das Gehäuse (2) als 3D-Druck- oder Spritzgussteil ausgebildet ist.

10. Fittinghalter (1) nach Anspruch 1 bis 9, **dadurch gekennzeichnet, dass** das Gehäuse (2) einteilig ausgebildet ist.

11. Fittinghalter (1) nach Anspruch 1 bis 10, **dadurch gekennzeichnet, dass** im Gehäuse (2) Längsführungen (17) angeordnet sind.

12. Fittinghalter (1) nach Anspruch 1 bis 11, **dadurch gekennzeichnet, dass** der Ring (6) mit den im Gehäuse (2) angeordneten Längsführungen (17) zusammenwirkende Führungselemente (18) aufweist.

## Claims

1. Fitting holder (1) designed for receiving a branch pipe (20) during a welding operation in order to attach the branch pipe (20) to a pipeline (21) or a pipe (21), wherein differently dimensioned branch pipes (20) can be received by the fitting holder (1), comprising a hollow-cylindrical housing (2) with an upper region (3) which, during the welding, faces away from the pipeline (21) to be welded thereto, and a lower region (4) which, during the welding, faces the pipeline (21) to be welded thereto, wherein mounts (5) for the axial fixing of the branch pipe (20) which can be received by the fitting holder (1) are arranged in the lower region (4), a ring (6) arranged displaceably in the housing (2), and clamping elements (7) pressing the ring (6) downwards, **characterized in that** the fitting holder (1) has different guide inside diameters (8, 9, 14) which guides the differently dimensioned branch pipes (20) by way of their differently dimensioned outside diameters in the fitting holder (1).

2. Fitting holder (1) according to Claim 1, **characterized in that** a guide inside diameter (8) is arranged in the housing (2) and a guide inside diameter (9) is arranged in the displaceable ring (6).

3. Fitting holder (1) according to Claim 1 or 2, **characterized in that** the mounts (5) for the axial fixing of the branch pipe (20) are designed as spring-loaded tabs (5).

4. Fitting holder (1) according to Claims 1 to 3, **characterized in that** the clamping elements (7) are designed as compression spring elements (7).

5. Fitting holder (1) according to Claims 1 to 4, **characterized in that** the fitting holder (1) has a cover (10) which makes it impossible for the ring (6) to fall out of the housing (2).

6. Fitting holder (1) according to Claim 5, **characterized in that** the cover has a guide inside diameter (14) for guiding a branch pipe (20).

7. Fitting holder (1) according to Claims 1 to 6, **characterized in that** the housing (2) has a supporting surface (11) onto which the ring (6) is pressed by means of a clamping element (7).

8. Fitting holder (1) according to Claims 1 to 7, **characterized in that** the housing (2) of the fitting holder (1) is made from plastic.

9. Fitting holder (1) according to Claims 1 to 8, **characterized in that** the housing (2) is in the form of a 3D printed part or injection-moulded part.

10. Fitting holder (1) according to Claims 1 to 9, **characterized in that** the housing (2) is formed integrally.

11. Fitting holder (1) according to Claims 1 to 10, **characterized in that** longitudinal guides (17) are arranged in the housing (2).

12. Fitting holder (1) according to Claims 1 to 11, **characterized in that** the ring (6) has guide elements (18) interacting with the longitudinal guides (17) arranged in the housing (2).

## Revendications

1. Support de raccord (1) formé pour recevoir un tuyau de dérivation (20) pendant une opération de soudage pour installer le tuyau de dérivation (20) sur une conduite tubulaire (21) ou sur un tuyau (21), des tuyaux de dérivation (20) de dimensions différentes pouvant être reçus par le support de raccord (1), contenant un boîtier cylindrique creux (2) avec une zone supérieure (3), qui est opposée à la conduite tubulaire (21) à souder à celle-ci pendant le soudage, et une zone inférieure (4), qui est tournée vers la conduite tubulaire (21) à souder à celle-ci pendant le soudage, des supports (5) pour la fixation axiale du tuyau de dérivation (20) pouvant être reçu par le support de raccord (1) étant disposés dans la zone inférieure (4), une bague (6) disposée de manière à pouvoir coulisser dans le boîtier (2) et des éléments de serrage (7) poussant la bague (6) vers le bas, **caractérisé en ce que** le support de raccord (1) présente des diamètres intérieurs de guidage (8, 9, 14) différents, qui guident les tuyaux de dérivation (20) de dimensions différentes dans le support de raccord (1) sur leurs diamètres extérieurs de dimensions différentes.

2. Support de raccord (1) selon la revendication 1, **caractérisé en ce qu'**un diamètre intérieur de guidage (8) est disposé dans le boîtier (2) et un diamètre intérieur de guidage (9) est disposé dans la bague (6) pouvant être coulissée.

3. Support de raccord (1) selon la revendication 1 ou 2, **caractérisé en ce que** les supports (5) pour la fixation axiale du tuyau de dérivation (20) sont formés comme des pattes élastiques (5).

4. Support de raccord (1) selon les revendications 1 à 3, **caractérisé en ce que** les éléments de serrage (7) sont formés comme des éléments de ressort de pression (7).

5. Support de raccord (1) selon les revendications 1 à 4, **caractérisé en ce que** le support de raccord (1) comporte un couvercle (10) qui empêche la bague (6) de tomber hors du boîtier (2).

6. Support de raccord (1) selon la revendication 5, **caractérisé en ce que** le couvercle présente un diamètre intérieur de guidage (14) pour le guidage d'un tuyau de dérivation (20).

7. Support de raccord (1) selon les revendications 1 à 6, **caractérisé en ce que** le boîtier (2) comporte une surface d'appui (11), sur laquelle la bague (6) est poussée au moyen d'un élément de serrage (7).

8. Support de raccord (1) selon les revendications 1 à 7, **caractérisé en ce que** le boîtier (2) du support de raccord (1) est en matière plastique.

9. Support de raccord (1) selon les revendications 1 à 8, **caractérisé en ce que** le boîtier (2) est formé comme une pièce imprimée en 3D ou une pièce moulée par injection.

10. Support de raccord (1) selon les revendications 1 à 9, **caractérisé en ce que** le boîtier (2) est formé d'une seule pièce.

11. Support de raccord (1) selon les revendications 1 à 10, **caractérisé en ce que** des guides longitudinaux (17) sont disposés dans le boîtier (2).

12. Support de raccord (1) selon les revendications 1 à 11, **caractérisé en ce que** la bague (6) comporte des éléments de guidage (18) coopérant avec les guides longitudinaux (17) disposés dans le boîtier (2).
